# FASCICULE DE BREVET EUROPEEN

(11) **EP 1 273 382 B1**
(45) Date de publication et mention de la délivrance du brevet: **30.05.2007**
(21) Numéro de dépôt: 02291668.8
(22) Date de dépôt: 04.07.2002
(51) Int. Cl.: B23K 26/14

(54) **Appareil de soudage par faisceau laser miniaturisé**
Schweissvorrichtung mit einem miniturisierten Laserstrahl
Miniaturised laser beam welding apparatus

(30) Priorité: 05.07.2001 FR 0108920
(43) Date de publication de la demande: 08.01.2003
(73) Titulaire: SNECMA, 75015 Paris (FR)
(72) Inventeur: Aubry, Pascal, 75002 Paris (FR); Dubois, Thierry, FR-94230 Cachan (FR); Hertmanowski, Sophie, 91540 Mennecy (FR); Launais, Hervé, 91800 Brunoy (FR)

(56) Documents cités:
- EP-A- 0 300 458
- EP-A- 0 514 235

## Description

### Domaine technique de l'invention

L'invention se rapporte à un appareil de soudage par faisceau laser de puissance, soit à titre indicatif de 500 watts à plusieurs kilowatts, miniaturisé selon le préambule de la revendication 1, susceptible d'être amené très près des surfaces des pièces à souder et d'atteindre des surfaces à souder rendues difficilement accessibles à cause d'obstacles situés au-dessus d'elles. Le document EP 300 458 A décrit un tel appareil.

### Etat de la technique et problème posé

Il est connu de souder des métaux à l'aide d'un faisceau laser de puissance. Pour ce faire, on utilise un appareil de soudage comportant une enceinte de forme habituellement allongée à l'intérieur de laquelle le faisceau laser est susceptible de circuler et de ressortir par une extrémité de l'enceinte pour toucher la pièce à souder. L'enceinte est étanche à la lumière afin de protéger l'opérateur de toute propagation accidentelle du faisceau laser en dehors de l'enceinte. Par le terme étanche à la lumière, on entend que l'enceinte empêche toute sortie accidentelle du faisceau laser, par exemple suite au déréglage d'un composant optique.

Le faisceau laser suit à l'intérieur de l'enceinte un chemin sur lequel on trouve successivement : une source laser de puissance, un système optique convergeant et une ouverture dite "frontale" par laquelle le faisceau laser est susceptible de ressortir de l'enceinte en direction de la pièce à souder. Le système optique convergeant concentre le faisceau laser sur un foyer situé à l'extérieur de l'enceinte, la pièce étant évidemment amenée sur ce foyer pour être soudée. La source laser peut être un générateur laser ou l'extrémité d'une fibre optique amenant le faisceau laser dans l'enceinte depuis un générateur éloigné. Dans des formes plus élaborées, l'enceinte peut être articulée et/ou comporter un ou plusieurs miroirs optiques disposés sur le chemin du faisceau laser et assurant les déviations appropriées du faisceau laser.

Pour simplifier le langage, on dira qu'un objet est situé à l'avant de l'ouverture frontale lorsqu'il se trouve en dehors de l'appareil et en regard de l'ouverture frontale. Inversement, un objet sera dit à l'arrière de l'ouverture frontale lorsqu'il se trouve de l'autre coté de l'ouverture frontale.

Les composants optiques doivent être protégés des vapeurs et projections du métal en fusion pendant le soudage. L'enceinte assure normalement cette fonction de protection mais des vapeurs et projections de métal en fusion peuvent passer par l'ouverture frontale, pénétrer dans enceinte et maculer les composants optiques, notamment ceux qui sont proches de l'ouverture frontale. On utilise différents moyens pour éviter cela :
- Réduction du diamètre de l'ouverture frontale au strict minimum pour laisser passer le faisceau laser,
- injection dans l'enceinte d'un gaz neutre sous une pression suffisante, le gaz ressortant par l'ouverture frontale et faisant ainsi obstacle aux vapeurs et projections de métal en fusion. Le gaz peut également être injecté dans l'ouverture frontale vers l'espace compris entre le miroir et la zone de soudage comme décrit dans le document EP300458 A.]
- éloignement des composants optiques de l'ouverture frontale ou éloignement de l'ouverture frontale de la pièce à souder.

Le brevet EP 0 514 235 divulgue un appareil permettant de souder des surfaces au-dessus desquelles se trouvent des obstacles, cet appareil de soudage comportant une enceinte tubulaire allongée, une source laser étant disposée à une extrémité, l'ouverture frontale étant disposée latéralement à l'autre extrémité, un miroir étant disposé derrière l'ouverture frontale et déviant vers elle le faisceau laser issu de la source laser, l'extrémité de travail de l'appareil de soudage étant passée entre les surfaces à souder et les obstacles, en l'occurrence la paroi intérieure d'un tube de centrale nucléaire. Un gaz neutre ressort par l'ouverture frontale et vient protéger de l'air ambiant la surface en cours de soudage. Cet appareil de soudage présente cependant l'inconvénient d'exposer le miroir aux vapeurs et projections de métal en fusion car :
- ce miroir est très proche du métal en fusion dans la zone de soudage,
- la pression du gaz protecteur reste nécessairement limitée par mesure d'économie et afin de ne pas disperser le métal en fusion. On remarquera sur la figure que l'ouverture est bien plus large que le faisceau laser qui y passe. Ceci permet de bien entourer de gaz neutre la zone en cours de soudage et de ne pas créer un jet de gaz qui pourrait disperser le métal en fusion. En contrepartie, le gaz protecteur n'a qu'une faible vitesse lorsqu'il traverse l'ouverture frontale. Il ne peut donc constituer qu'un faible obstacle aux vapeurs et projections de métal liquide et le miroir est en conséquence dégradé rapidement.

Il faut donc changer fréquemment ce miroir. Un tel appareil de soudage convient donc aux réparations de pièces minces ne nécessitant qu'une puissance réduite, mais pas à une utilisation industrielle en atelier sur des pièces épaisses avec une forte puissance laser.

Un premier problème à résoudre est de proposer une tête de soudage dont l'ouverture frontale est susceptible d'être amenée très près de la surface à souder sans que les composants optiques soient maculés par les vapeurs et projections de métal en fusion et sans que ce métal en fusion soit perturbé, par exemple par un flux de gaz sortant de l'ouverture frontale.

Un second problème à résoudre est de proposer une tête de soudage susceptible d'être passée entre les surfaces à souder et des obstacles proches situées au-dessus des surfaces à souder.

### Exposé de l'invention

Pour résoudre le premier problème, l'invention propose un appareil de soudage par faisceau laser miniaturisé selon la revendication 1.

Par le terme "transversalement" on entend que le flux secondaire est dirigé parallèlement à la surface de l'ouverture frontale. Avec une telle disposition :
a) Le flux primaire repousse les vapeurs et projections de métal en fusion qui se dirigent vers l'ouverture frontale, ce qui empêche ces vapeurs et projections de pénétrer à l'intérieur de la tête de soudage.
b) Le flux secondaire arrive sur le flux primaire perpendiculairement à lui et au moment où il sort par l'ouverture frontale, ce qui a pour effet de dévier le flux primaire et de l'empêcher ainsi d'arriver sur le métal liquide qui se forme un peut plus loin au voisinage du foyer.

Ainsi, les vapeurs et projections de métal en fusion ne peuvent pénétrer dans la tête de soudage par l'ouverture frontale et le métal en fusion de la soudure n'est pas perturbé, déformé voire dispersé par le flux de gaz primaire, ce qui permet de disposer la tête de soudage très près de la surface à souder et résout ainsi le premier problème.
L'opérateur donnera au flux primaire une force suffisante pour repousser les vapeurs et projections de métal en fusion qui s'approchent de l'ouverture frontale. Egalement, l'opérateur donnera au flux secondaire une force suffisante pour dévier le flux primaire afin qu'il n'atteigne pas, au moins directement, le métal liquide qui se forme au voisinage du foyer à l'avant de l'ouverture frontale.

Avantageusement, la tête de soudage comporte également un bouclier positionné devant l'ouverture frontale, ledit bouclier étant en matériau rigide résistant aux hautes températures, par exemple en niobium, le bouclier étant percé d'un trou positionné dans l'axe géométrique de l'ouverture frontale. Ce bouclier permet de canaliser le flux primaire et le flux secondaire transversalement à l'ouverture frontale ce qui améliore la protection du métal en fusion vis à vis du flux primaire..

Le bouclier constitue également un obstacle mécanique aux vapeurs et projections de métal en fusion se dirigeant vers la tête de soudage et autours de l'ouverture frontale ce qui réduit l'encrassement de la tête de soudage. Le bouclier fait en particulier obstacle aux vapeurs et projections de métal en fusion se dirigeant entre l'ouverture frontale et la buse, ces projections étant, sans le bouclier, susceptibles d'être ramenées devant l'ouverture frontale par le flux secondaire. Ainsi, et malgré la présence du trou situé entre le métal en fusion et l'ouverture frontale, cet effet d'obstacle améliore encore l'intégrité de l'intérieur de la tête de soudage aux vapeurs et projection de métal en fusion.

Le bouclier est avantageusement amovible afin de pouvoir être nettoyé ou remplacé lorsqu'il est encrassé.

Avantageusement encore, la tête de soudage comporte une jupe entourant l'ouverture frontale, la buse et le bouclier, la jupe étant ouverte et évasée à l'avant du bouclier, la jupe étant en matériau mince, souple et étanche au gaz, un espace étant laissé entre au moins un bord du bouclier et la jupe. Ainsi, la jupe coopère avec cet espace pour ramener le gaz du flux primaire et du flux secondaire au-dessus de la zone en cours de soudage, ce qui permet de protéger de l'air ambiant la zone de soudage avec une moindre consommation de gaz. La jupe ayant une longueur appropriée pour arriver au contact de la surface de la pièce à souder, cette jupe permet également de retenir le gaz du flux primaire et du flux secondaire au-dessus de la zone de soudage et par conséquent de réduire simultanément la consommation de gaz et l'oxydation de la pièce en cours de soudage..

Avantageusement encore, la tête de soudage comporte également un miroir positionné juste à l'arrière de l'ouverture frontale et déviant de 90° le faisceau laser vers cette ouverture frontale. Cette disposition permet de réduire l'encombrement de la tête de soudage à l'arrière de l'ouverture frontale, ce qui permet de faire passer la tête de soudage entre les surfaces à souder et un obstacle proche, cette disposition permettant de résoudre le second problème.

En particulier, la déposante revendique une tête de soudage dont l'épaisseur E1 entre l'ouverture frontal et la paroi opposée à l'ouverture frontale est inférieure à 50mm.

### Description des figures

L'invention sera mieux comprise au vu d'un exemple détaillé de réalisation et des figures annexées.

La figure 1 illustre une tête de soudage montée à l'extrémité d'un appareil de soudage alimenté en lumière par une fibre optique..

La figure 2 illustre en détail la tête de soudage proprement dite.

### Description détaillée

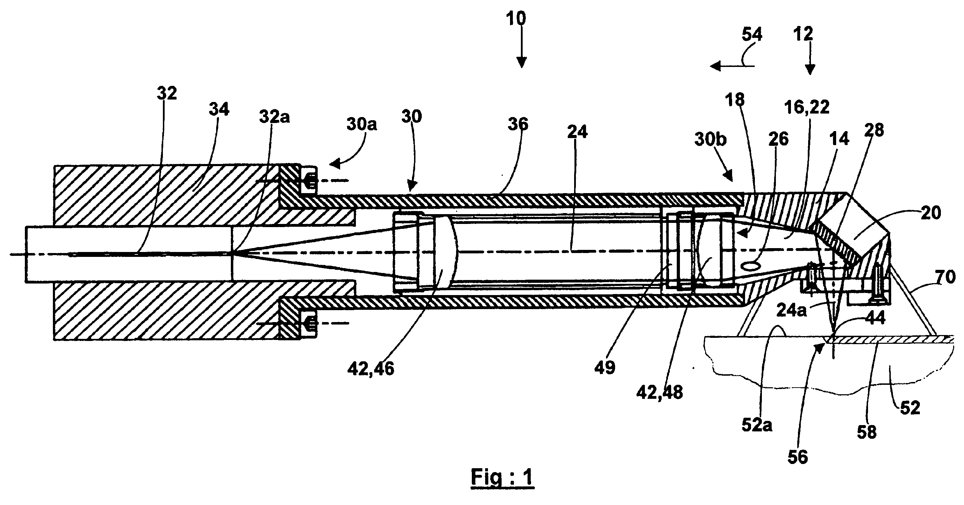

On se reportera en premier lieu à la figure 1. L'appareil de soudage 10 comporte une tête de soudage 12 constituée par une paroi 14 définissant une cavité fermée 16, la paroi 14 étant étanche à la lumière, la paroi 14 comportant cependant une ouverture dite "d'admission" 18 et une ouverture dite "frontale" 20, un faisceau laser 22 étant susceptible de pénétrer dans la cavité 16 par l'ouverture d'admission 18 et de ressortir de cette cavité 16 par l'ouverture frontale 20 en suivant un chemin optique 24. La tête de soudage 12 comporte aussi une alimentation 26 susceptible d'être connectée à une source de gaz pressurisé et neutre, par exemple de l'argon, cette alimentation 26 étant dans cet exemple un conduit traversant la paroi 14 pour déboucher dans la cavité 16.

Dans cet exemple, l'ouverture d'admission 18 et l'ouverture frontale 20 sont planes, circulaires et centrées sur le chemin optique 24 qui en constitue les axes géométriques. L'ouverture d'admission 18 et l'ouverture frontale 20 sont perpendiculaires. Un miroir 28 est disposé dans la cavité 16 sur le chemin optique 24. Le miroir 28 dévie de 90° le faisceau laser afin de le diriger vers l'ouverture frontale 20. Le miroir doit évidemment résister aux hautes températures. Il peut être par exemple en ZnSe, en cuivre avec circuit de refroidissement ou du type "diélectrique".

L'appareil de soudage 10 comporte également une enceinte 30 de forme générale allongée dont on référencera 30a et 30b les extrémités opposées. Une source de lumière laser 32 est disposée à une première extrémité 30a et produit le faisceau laser 22 qui traverse l'intérieur de l'enceinte 30 en suivant le chemin optique 24, le faisceau laser 22 arrivant à l'autre extrémité 30b contre laquelle est attachée la tête de soudage 12, l'extrémité 30b entourant l'ouverture d'admission 18, le faisceau laser 22 pouvant ainsi passer de l'intérieur de l'enceinte 30 dans la cavité 16 de la tête de soudage 12.
Dans cet exemple, la source laser 32 est ponctuelle et constituée par une fibre optique qui amène par son extrémité 32a à l'intérieur de l'enceinte 30 la lumière laser depuis un générateur distant non représenté. Dans cet exemple également, l'extrémité 30a de l'enceinte 30 est constituée par une embase 34 qui supporte la source laser 32, cette embase 34 étant prolongée jusqu'à l'autre extrémité 30b par un tube droit 36, le tube droit 36 étant attaché à l'embase par des vis non référencées. La tête de soudage 12 est également attachée à l'extrémité du tube droit 36. Dans un mode préféré de réalisation, la liaison entre la tête de soudage 12 et l'enceinte 30 est amovible afin de pouvoir combiner des têtes de soudage 12 de géométries différentes avec des tubes droits 36 de longueurs différentes.

L'appareil de soudage 10 comporte sur le chemin optique 24 un système optique 42 qui concentre le faisceau laser 22 sur un foyer 44 devant l'ouverture frontale 20 à l'extérieur de la tête de soudage 12, ce foyer 44 étant sur le chemin optique 24. Dans le cas où la source laser 32 est ponctuelle, le système optique 42 est convergeant et donne de la source laser 32 une image réelle sur ce foyer 44. Egalement, le système optique convergent 42 comporte deux lentilles convergentes. La première lentille dite de "collimation" 46 transforme en faisceau parallèle le faisceau laser divergent qui émerge de l'extrémité 32a de la fibre optique, la seconde lentille 48 dite de "focalisation" transformant ce faisceau parallèle en un faisceau convergeant sur le foyer 44. Cette disposition permet d'utiliser des tubes droits 30 de longueur différentes sans que change la position du foyer 44 par rapport à l'ouverture frontale 20 et la tête de soudage 12 tant que demeurent inchangées la position relative de la lentille de collimation par rapport à l'extrémité 32a de la fibre optique et la position relative de la lentille de focalisation 48 par rapport à la tête de soudage 12. Dans cet exemple, le système optique 42 comporte également un prisme 49 disposé entre la lentille de collimation 46 et la lentille de focalisation 48 au voisinage de cette dernière, le prisme 49 coupant dans sa partie cylindrique le faisceau laser 22 sur la moitié de sa section, ce prisme 49 déviant légèrement la moitié du faisceau laser 22 sur un second foyer secondaire non référencé légèrement décalé par rapport au foyer 44, cette disposition étant connue en soi.

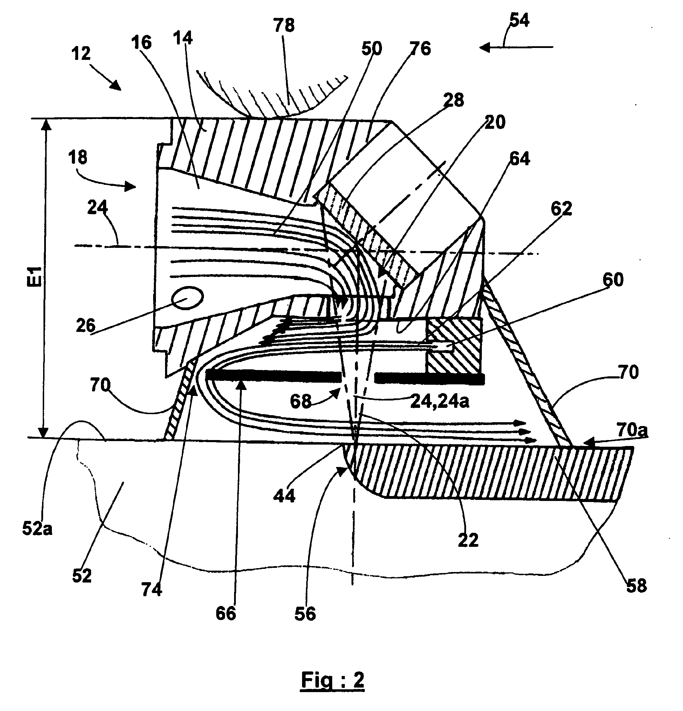

Nous allons maintenant décrire plus particulièrement la tête de soudage et on se reportera pour cela simultanément aux figures 1 et 2.

L'alimentation 26 produit un flux de gaz 50 dit "primaire". La tête de soudage 12 est positionnée au-dessus des surfaces 52a des pièces à souder 52, le foyer 44 étant sur ces surface 52a, la tête de soudage 12 étant soumise à un déplacement parallèle aux surfaces 52a, ce déplacement étant illustré par le vecteur vitesse 54. Sous l'effet calorifique du faisceau laser 22, le métal se liquéfie au voisinage du foyer 44 et se solidifie ensuite pour former le cordon de soudure 58. On référencera 56 le métal liquide qui se forme au voisinage du foyer 44 pendant le soudage. Ce métal liquide émet des vapeurs et projections susceptibles de passer par l'ouverture frontale 20, de pénétrer dans la cavité 16 de la tête de soudage 12 et de toucher le miroir 28 qui est juste derrière l'ouverture frontale 20. On comprend que si on augmente l'intensité du flux primaire 50 pour empêcher les vapeurs et projections du métal liquide 56 de pénétrer dans l'enceinte 16, le flux primaire 50 arrivera sur le métal liquide 56 avec une vitesse trop forte qui provoquera sa déformation, voire sa dispersion, et qui déformera ainsi le cordon de soudure 58 en formation

La tête de soudage 12 comporte une buse 60 susceptible d'être raccordée à une source de gaz sous pression non représentée, cette buse étant positionnée pour délivrer un flux de gaz 62 dit " secondaire" passant devant l'ouverture frontale 20 et transversalement à elle. Le flux secondaire 62 balaie toute la surface de l'ouverture frontale 20 sans toutefois pénétrer à l'intérieur de l'enceinte 16 par cette ouverture frontale 20. Le flux secondaire 62 arrive donc en collision avec le flux primaire 50 sensiblement perpendiculairement au chemin optique 24 devant l'ouverture frontale 20, le flux secondaire 62 déviant ainsi le flux primaire 50 qui ne peut donc plus arriver directement sur le métal liquide 56 et en provoquer la dispersion. On désignera par le terme "paroi frontale" 64 la surface extérieure de la paroi 14 de la tête de soudage située autours de l'ouverture frontale 20. La paroi frontale 64 est en pratique plane et perpendiculaire au chemin optique 24 lorsqu'il traverse l'ouverture frontale 20. La buse 60 est fixée contre la paroi frontale 64 mais excentrée par rapport à l'ouverture frontale 20. La buse 60 est cependant dirigée vers l'ouverture frontale 20 et produit le flux secondaire 62 transversal à l'ouverture frontale 20 et parallèle à la paroi frontale 64.

On disposera également devant l'ouverture frontale 20 un bouclier 66 plan, mince et parallèle à la paroi frontale 64, donc perpendiculaire au chemin optique 24, la buse 60 étant entre la paroi frontale 64 et le bouclier 66, le bouclier 66 étant percé d'un trou 68 centré sur le chemin optique 24, le bouclier 66 étant plus près de la paroi frontale 64 que ne l'est le foyer 44. Ce bouclier est réalisé en matériau résistant à la chaleur, par exemple en niobium. Un tel bouclier présente plusieurs avantages :
- D'abord, il canalise le flux secondaire 62 et le flux primaire 50 parallèlement à la paroi frontale 64 ce qui améliore la protection du métal liquide 56 vis à vis du flux primaire 50.
- Ensuite, il fait obstacle aux vapeurs et projections de métal liquide 56 ce qui permet d'éviter l'encrassement de la tête de soudage elle-même.
- Enfin, il fait obstacle aux vapeurs et projections de métal liquide qui iraient autrement entre l'ouverture frontale 20 et la buse 60 et qui seraient alors susceptibles d'être déviées vers l'ouverture frontale 20 par le flux secondaire 62. Ainsi, par cet effet d'obstacle supplémentaire et malgré le trou situé sur le chemin optique, le bouclier 66 améliore encore la protection des composants optiques, en particulier du miroir 28, aux vapeurs et projections de métal liquide 56.

Ce bouclier peut être en nobium, en alliage métallique dans lequel le nobium est majoritaire ou en superalliage base nickel. Le trou 68 et l'ouverture frontale 20 sont de préférence homothétiques par rapport au foyer 44, ce qui permet de limiter leurs dimensions au stricte nécessaire au passage du faisceau laser 22.

On disposera également une jupe 70 entourant le faisceau laser 22 entre l'ouverture frontale 20 et le foyer 44, une extrémité de la jupe remontant jusqu'à la paroi frontale 64 et formant une ouverture entourant l'ouverture frontale 20, l'autre extrémité de la jupe formant une ouverture évasée autour du foyer 44, cette jupe 70 étant en matériau résistant à la chaleur, notamment aux projections de métal liquide 56, cette jupe étant latéralement étanche au gaz, cette jupe entourant également la buse 60 et le bouclier 66 en laissant un espace 74 avec le bord 66a du bouclier 66 opposé à la buse 60. La jupe a une hauteur appropriée pour que son extrémité évasée 70a affleure la surface 52a de la pièce à souder 52 pendant le soudage. La jupe 70 ramène et retient au-dessus du métal liquide 56 les flux primaires et secondaires 50,62 en les faisant passer par l'espace 74 précédemment défini. Le gaz ainsi retenu protège efficacement la surface 52a à souder autour du métal liquide 56. Ce gaz s'écoule ensuite entre la jupe 70 et les surfaces 52a à souder.

Pendant le soudage, on déplacera la tête de soudage de préférence dans la direction du flux secondaire 62 sortant de la buse 60. Ainsi, les flux primaires et secondaires réunis 60,62 arrivent avec une vitesse plus réduire parallèlement au cordon de soudure 58 en formation, ce qui évite de le déformer.

En pratique, le bouclier est amovible afin de pouvoir être nettoyé ou remplacé lorsqu'il est trop encrassé par les vapeurs et projections de métal liquide. Dans le cas d'une tête de soudage fortement miniaturisée, il peut être tenu par deux vis vissées dans la paroi frontale, la buse étant prise en sandwich entre le bouclier et la paroi frontale.

La jupe 70 est découpée dans un tissus de fibre de verre avec un tissage serré, cette jupe étant recouverte, sur sa face externe, d'une couche d'élastomère silicone résistant aux hautes températures, ces deux matériaux étant couramment disponibles dans le commerce. Une telle jupe est à la fois flexible et résistante au déchirement. De plus, l'élastomère silicone assure l'étanchéité au gaz de la jupe et le tissu de fibre de verre protège l'élastomère silicone des vapeurs et projections de métal en fusion ainsi que du rayonnement thermique.

L'invention a permis de miniaturiser fortement l'appareil de soudage. C'est pourquoi la déposante revendique également un appareil de soudage comportant une tête de soudage selon l'invention dont l'encombrement E1 pris selon l'axe géométrique de l'ouverture frontale 24a est au plus égal à 50mm. Dans le cas d'une tête de soudage 12 avec jupe 70, cet encombrement correspondant en pratique à la distance entre l'ouverture évasée 70a de la jupe 70 et la face extérieure 76 de la paroi 14 à l'arrière de l'ouverture frontale 20. Ainsi, l'appareil de soudage 10 permet de souder les surfaces 52a des pièces 52 malgré la présence d'un obstacle 78 situé à une distance E1 au-dessus des surfaces à souder 52a.

La présente invention a permis en particulier de réaliser une tête de soudage alimentée par un laser YAG de 4kw et ne nécessitant pourtant qu'un espace de 24mm au-dessus des surfaces 52a à souder.

## Revendications

1. Appareil de soudage par faisceau laser miniaturisé, cet appareil (10) comportant une tête de soudage (12) constituée par une paroi (14) entourant une cavité (16), la paroi (14) comportant une première ouverture dite "d'admission" (18) et une seconde ouverture dite "frontale" (20), un faisceau laser (22) étant susceptible d'entrer dans la tête de soudage (12) par l'ouverture d'admission (18) et d'en ressortir par l'ouverture frontale (20) en suivant un chemin optique (24) prédéfini, la tête de soudage (12) comportant une alimentation (26) de gaz sous pression susceptible de produire dans la cavité (16) un flux de gaz dit " primaire" (50) ressortant de la tête de soudage (12) par l'ouverture frontale (20), une buse (60) susceptible d'être raccordée à une source de gaz sous pression, cette buse (60) étant à l'extérieur de la tête de soudage (12) contre la paroi (14), la buse (60) produisant un flux de gaz sous pression dit " secondaire" balayant transversalement l'espace situé immédiatement devant l'ouverture frontale (20),
**caractérisé en ce que** la tête de soudage (12) comporte un bouclier (66) positionné devant l'ouverture frontale (20), le bouclier (66) étant sensiblement plan et parallèle à la paroi (14) entourant l'ouverture frontale (20) appelée paroi frontale (64), ledit bouclier (66) étant percé d'un trou situé devant l'ouverture frontale (20), la buse (60) étant positionnée entre le bouclier (66) et la paroi frontale (64).

2. Appareil selon la revendication 1 **caractérisé en ce que** le bouclier est amovible.

3. Appareil selon la revendication 1 ou 2 **caractérisé en ce que** le bouclier est en nobium.

4. Appareil selon la revendication 3 **caractérisé en ce que** la tête de soudage (12) comporte une jupe (70) entourant l'ouverture frontale (20), la buse (60) et le bouclier (66), la jupe (70) étant ouverte et évasée à l'avant du bouclier (66), la jupe étant en matériau mince, souple et étanche au gaz, un espace (74) étant laissé entre au moins un bord (66a) du bouclier (66) et la jupe (70).

5. Appareil selon l'une quelconque des revendications 1 à 4 **caractérisé en ce que** la tête de soudage (12) comporte également un miroir (28) positionné juste à l'arrière de l'ouverture frontale (20), le miroir (28) déviant vers l'ouverture frontale (20) le faisceau laser (22) venant de l'ouverture d'admission (18).

6. Appareil selon la revendication 5, la paroi (14) comportant une partie (76) à l'arrière de l'ouverture frontale (20), **caractérisé en ce que** la tête de soudage (12) a une épaisseur E1 au plus égale à 50mm, l'épaisseur E1 étant prise entre l'ouverture frontale (20) et la partie (76) de la paroi (14) à l'arrière de l'ouverture frontale (20).

7. Appareil selon la revendication 5 ou 6 **caractérisé en ce qu'**il comporte une enceinte (30) de forme générale allongée dont les extrémités sont référencées respectivement (30a) et (30b), une source de lumière laser (32) étant disposée à une première extrémité (30a), l'autre extrémité (30b) étant attachée à la tête de soudage (12) et entourant l'ouverture d'admission (18).

8. Appareil selon la revendication 7 **caractérisé en ce que** la source de lumière laser (32) est ponctuelle et **en ce qu'**il comporte un système optique (42) qui donne de la source laser (32) une image réelle sur un foyer (44) à l'avant de l'ouverture frontale (20).

9. Appareil selon la revendication 8 **caractérisé en ce que** la source laser (32) est une fibre optique.

10. Appareil selon la revendication 7 ou 8 **caractérisé en ce que** la liaison entre la tête de soudage (12) et l'enceinte (30) est amovible.

## Claims

1. Miniaturized laser welding apparatus, this apparatus (10) comprising a welding head (12) consisting of a wall (14) surrounding a cavity (16), the wall (14) having a first opening (18) called the "intake opening" and a second opening (20) called the "front opening", a laser beam (22) being able to enter the welding head (12) via the intake opening (18) and to emerge therefrom via the front opening (20) by following a predefined optical path (24), the welding head (12) having a supply (26) of pressurized gas capable of producing, in the cavity (16), a stream of gas (50) called the "primary stream" emerging from the welding head (12) via the front opening (20), a nozzle (60) that can be connected to a source of pressurized gas, this nozzle (60) being outside the welding head (12) against the wall (14), the nozzle (60) producing a stream of pressurized gas called the "secondary stream" transversely sweeping the space located immediately in front of the front opening (20),
**characterized in that** the welding head (12) includes a shield (66) positioned in front of the front opening (20), the shield (66) being substantially plane and parallel to the wall (14) surrounding the front opening (20) and called the front wall (64), said shield (66) being pierced by a hole located in front of the front opening (20), the nozzle (60) being positioned between the shield (66) and the front wall (64).

2. Apparatus according to Claim 1, **characterized in that** the shield is removable.

3. Apparatus according to Claim 1 or 2, **characterized in that** the shield is made of niobium.

4. Apparatus according to Claim 3, **characterized in that** the welding head (12) includes a skirt (70) surrounding the front opening (20), the nozzle (60) and the shield (66), the skirt (70) being open and flared towards the front of the shield (66), the skirt being made of a thin, flexible and gas-impermeable material, a space (74) being left between at least one edge (66a) of the shield (66) and the skirt (70).

5. Apparatus according to any one of Claims 1 to 4, **characterized in that** the welding head (12) also includes a mirror (28) positioned just to the rear of the front opening (20), the mirror (28) deflecting the laser beam (22) coming from the intake opening (18) towards the front opening (20).

6. Apparatus according to Claim 5, the wall (14) having a part (76) to the rear of the front opening (20), **characterized in that** the welding head (12) has a thickness E1 of at most 50 mm, the thickness E1 being taken between the front opening (20) and the part (76) of the wall (14) to the rear of the front opening (20).

7. Apparatus according to Claim 5 or 6, **characterized in that** it includes a chamber (30) of elongate general shape, the ends of which are denoted by (30a) and (30b) respectively, a laser light source (32) being placed at a first end (30a), the other end (30b) being attached to the welding head (12) and surrounding the intake opening (18).

8. Apparatus according to Claim 7, **characterized in that** the laser light source (32) is a point source and **in that** it includes an optical system (42) that gives a real image of the laser source (32) on a focal spot (44) in front of the front opening (20).

9. Apparatus according to Claim 8, **characterized in that** the laser source (32) is an optical fibre.

10. Apparatus according to Claim 7 or 8, **characterized in that** the connection between the welding head (12) and the chamber (30) is removable.

## Patentansprüche

1. Miniaturisierte Laserstrahl-Schweißvorrichtung (10), die einen Schweißkopf (12) enthält, der von einer Wandung (14) gebildet wird, die einen Hohlraum (16) umgibt, wobei die Wandung (14) eine erste Öffnung, eine sogenannte "Einlassöffnung" (18) und eine zweite Öffnung, eine sogenannte "Frontseitenöffnung" (20) aufweist, wobei ein Laserstrahl (22) in der Lage ist, durch die Einlassöffnung (18) in den Schweißkopf (12) einzudringen und durch die Frontseitenöffnung (20) aus diesem wieder auszutreten, indem er einen vorbestimmten optischen Weg (24) verfolgt, wobei der Schweißkopf (12) eine Versorgung (26) mit Druckgas aufweist, die in der Lage ist, in dem Hohlraum (16) einen sogenannten "Primärgasstrom" (50) zu erzeugen, der aus dem Schweißkopf (12) durch die Frontseitenöffnung (20) austritt, sowie eine Düse (60) aufweist, die an eine Druckgas-Quelle angeschlossen werden kann, wobei diese Düse (60) sich außerhalb des Schweißkopfs (12) an der Wandung (14) befindet, wobei die Düse (60) einen sogenannten Neben-Druckgasstrom erzeugt, der den Freiraum unmittelbar vor der Frontseitenöffnung (20) quer bestreicht,
**dadurch gekennzeichnet,**
**dass** der Schweißkopf (12) ein Schutzschild (66) aufweist, der vor der Frontseitenöffnung (20) angeordnet ist, wobei der Schutzschild (66) im Wesentlichen eben und parallel zu der die Frontseitenöffnung (20) umgebende Wandung (14) liegt, die Frontseitenwandung (64) genannt wird, wobei durch diesen Schutzschild (66) von einem Loch durchsetzt ist, das sich vor der Frontseitenöffnung (20) befindet, wobei die Düse (60) zwischen dem Schutzschild (66) und der Frontseitenwandung (64) angeordnet ist.

2. Vorrichtung nach Anspruch 1,
**dadurch gekennzeichnet,**
**dass** der Schutzschild abnehmbar ist.

3. Vorrichtung nach Anspruch 1 oder 2,
**dadurch gekennzeichnet,**
**dass** der Schutzschild aus Nobelium besteht.

4. Vorrichtung nach Anspruch 3,
**dadurch gekennzeichnet,**
**dass** der Schweißkopf (12) einen Mantel (70) aufweist, der die Frontseitenöffnung (20), die Düse (60) und den Schutzschild (66) umgibt, wobei der Mantel (70) vor dem Schutzschild (66) offen und ist und sich erweitert, wobei der Mantel aus einem dünnen, biegsamen und gasdichten Werkstoff besteht, wobei ein Zwischenraum (74) zwischen mindestens einem Rand (66a) des Schutzschilds (66) und dem Mantel (70) vorgesehen ist.

5. Vorrichtung nach einem der Ansprüche 1 bis 4,
**dadurch gekennzeichnet,**
**dass** der Schweißkopf (12) ferner einen Spiegel (28) aufweist, der direkt hinter der Frontseitenöffnung (20) angeordnet ist, wobei der Spiegel (28) den von der Einlassöffnung (18) kommenden Laserstrahl (22) zur Frontseitenöffnung (20) hin umlenkt.

6. Vorrichtung nach Anspruch 5, wobei die Wandung (14) einen Teil (76) hinter der Frontseitenöffnung (20) aufweist,
**dadurch gekennzeichnet,**
**dass** der Schweißkopf (12) eine Dicke E1 aufweist, die höchstens 50 mm beträgt, wobei die Dicke E1 zwischen der Frontseitenöffnung (20) und dem Teil (76) der Wandung (14) hinter der Frontseitenöffnung (20) gemessen wird.

7. Vorrichtung nach Anspruch 5 oder 6,
**dadurch gekennzeichnet,**
**dass** sie einen allgemein länglich geformten abgeschlossenen Raum (30) aufweist, dessen Enden mit den Bezugszahlen (30a) und (30b) bezeichnet sind, wobei an einem ersten Ende (30a) eine Laserlichtquelle (32) angeordnet ist, wobei das andere Ende (30b) an dem Schweißkopf (12) angebracht ist und die Einlassöffnung (18) umgibt.

8. Vorrichtung nach Anspruch 7,
**dadurch gekennzeichnet,**
**dass** die Laserlichtquelle (32) punktuell ist und dass sie ein Optiksystem (42) enthält, das von der Laserquelle (32) ein Realbild an einem Brennpunkt (44) vor der Frontseitenöffnung (20) ergibt.

9. Vorrichtung nach Anspruch 8,
**dadurch gekennzeichnet,**
**dass** die Laserlichtquelle (32) eine Lichtleitfaser ist.

10. Vorrichtung nach Anspruch 7 oder 8,
**dadurch gekennzeichnet,**
**dass** die Verbindung zwischen dem Schweißkopf (12) und dem abgeschlossenen Raum (30) abnehmbar ist.
